(19) Europäisches Patentamt

European Patent Office

Office européen des brevets

(11) Veröffentlichungsnummer: **0 274 727**
**B1**

# (12) EUROPÄISCHE PATENTSCHRIFT

(45) Veröffentlichungstag der Patentschrift:
03.10.90

(21) Anmeldenummer: 87119024.5

(22) Anmeldetag: 22.12.87

(51) Int. Cl.⁵: **B60H 1/32**, F25B 41/00

(54) Kältemittelkreislauf einer Klimaanlage.

(30) Priorität: 16.01.87 DE 3701086

(43) Veröffentlichungstag der Anmeldung:
20.07.88 Patentblatt 88/29

(45) Bekanntmachung des Hinweises auf die Patenterteilung:
03.10.90 Patentblatt 90/40

(84) Benannte Vertragsstaaten:
DE FR GB IT SE

(56) Entgegenhaltungen:
DE-A- 2 046 061
DE-A- 3 428 704
US-A- 3 237 422
US-A- 3 303 663

(73) Patentinhaber: **Bayerische Motoren Werke
Aktiengesellschaft, Patentabteilung
AJ-30 Postfach 40 02 40 Petuelring 130,
D-8000 München 40(DE)**

(72) Erfinder: **Grohmann, Kurt, Toni-Pfülf-Strasse 72,
D-8000 München 50(DE)**
Erfinder: **Baehr, Burghard, c/o Kenmore GmbH
Frankenforster Strasse 2a, D-8060 Bergisch
Gladbach 1(DE)**

(74) Vertreter: **Bücken, Helmut, Bayerische Motoren Werke
Aktiengesellschaft Postfach 40 02 40 Petuelring 130 -
AJ-30, D-8000 München 40(DE)**

## Beschreibung

Die Erfindung bezieht sich auf einen Kältemittelkreislauf einer Klimaanlage für Kraftfahrzeuge, der im Oberbegriff des ersten Anspruchs angegebenen Art und geht aus von der gattungsbildenden DE-A 3 428 704.

Beschrieben ist darin ein Verfahren zum Regeln der Kühlleistung einer Kälteanlage sowie die Kälteanlage hierzu. Üblicherweise wird die Kälteleistung bei Klimaanlagen durch alternierendes Zu- und Abschalten des Kompressors geregelt. In Kraftfahrzeugen eingebaute Kompressoren werden dabei über eine Schaltkupplung von der Brennkraftmaschine des Kraftfahrzeuges angetrieben. Diese Schaltkupplung ist jedoch oftmals mechanisch überbelastet nicht nur wegen der großen Anzahl von Schaltvorgängen, sondern auch wegen des oftmals im Kältemittelkreislauf herrschenden überhöhten Kältemitteldruckes. Ein derartiger überhöhter Kältemitteldruck kann beispielsweise verursacht werden durch eine mengenmäßig unzulässig hohe Befüllung des Kältemittelkreislaufes oder durch konstanten Kompressorbetrieb bei hohen Kompressordrehzahlen.

Die oben genannte Schrift schlägt deshalb vor, über ein Steuerorgan kontinuierlich dem Kältemittelkreislauf eine Teilmenge des verflüssigten Kältemittels zu entziehen, die entzogene Teilmenge über eine Bypassleitung am Drosselorgan sowie dem Verdampfer vorbeizuleiten und erst vor dem Kompressor wieder dem Kältemittelkreislauf zuzuführen. Somit ist es möglich, mittels des Steuerorganes auch bei Kompressor-Dauerbetrieb die am Verdampfer anfallende Kälteleistung zu steuern. Diese Lösung weist jedoch einen äußerst schlechten Wirkungsgrad auf, da die gesamte Kältemittelmenge überflüssigerweise stets durch den Kompressor gefördert wird, der Kompressor also kontinuierlich Leistung erbringen muß alleinig für die Überwindung der unvermeidbaren Strömungswiderstände in den Leitungen und in dem Kondensator.

Aufgabe der vorliegenden Erfindung ist es, wirkungsgradoptimale Maßnahmen zur Schonung der Schaltkupplung des Kompressors bereitzustellen. Diese Aufgabe wird durch die kennzeichnenden Merkmale des ersten Patentanspruches gelöst.

Wird das dem Kreislauf entzogene Kältemittel zumindest kurzzeitig in einem Behälter gespeichert und nicht sofort dem Kreislauf wieder zugeführt, so werden Druckspitzen im Kältemittelkreislauf abgebaut und die vom Kompressor zu leistende Arbeit bleibt nurmehr auf die tatsächlich im Kreislauf verbleibende Kältemittelmenge beschränkt. Vorteilhafterweise ist es bei Anwendung der erfindungsgemäßen Lösung auch nicht mehr erforderlich, den Kompressor in Dauerbetrieb zu betreiben, da nach Abzug einer Kältemittel-Teilmenge die die Kompressor-Schaltkupplung schädigenden Druckspitzen im Kältemittelkreislauf bei entsprechend reduzierter Kältemittelmenge überhaupt nicht mehr auftreten können. Somit kann im Hinblick auf eine Optimierung des Wirkungsgrades der Kompressor wie bekannt wieder alternierend betrieben werden, allein (kurzzeitiges) Abziehen einer Kältemittel-Teilmenge aus dem Kreislauf bewirkt eine deutlich reduzierte Belastung der Kompressor-Schaltkupplung. Bei weniger kritischen Betriebszuständen der Klimaanlage, also bei reduziertem Systemdruck, wird die im Behälter gespeicherte Kältemittel-Teilmenge dem Kreislauf wieder zugeführt.

Um nach Absinken des Systemdruckes die im Behälter gespeicherte Kältemittel-Teilmenge dem Kreislauf wieder zuzuführen, ist der Behälter als eine mit einem Druckspeicher versehene Kolben-Zylindereinheit ausgebildet oder mit einer das Kältemittel von einem Gaspolster trennenden Membran versehen. Auf diese Weise steht die im Behälter gespeicherte Kältemittel-Teilmenge unter ausreichendem Druck. An dieser Stelle soll ausdrücklich darauf hingewiesen werden, daß der im Behälter vorgesehene Druckspeicher zugleich die Funktion des Steuerorganes übernehmen kann, welches gemäß dem Oberbegriff des Hauptanspruches die zumindest kurzzeitige Abzweigung und Speicherung einer Kältemittel-Teilmenge verursacht. Dazu kann der Druckspeicher beispielsweise als Übertotpunktfeder ausgeführt sein. In ganz einfachen Anwendungsfällen erwies sich auch eine gängige Druckfeder als ausreichend.

Zwar ist aus der US-A 3 237 422 ein Wärmepumpen-Booster bekannt geworden, der u.a. ebenfalls einen Behälter zur kurzzeitigen Speicherung von verflüssigtem Kreislauf-Medium aufweist. Dieser Behälter dient jedoch abweichend von vorliegender Erfindung der Erhöhung der Heizleistung der Wärmepumpe, welche darüber hinaus keine Kompressor-Schaltkupplung aufweist.

Nach Anspruch 3 kann das Steuerorgan als einfaches Überdruckventil oder als ein von einem Druckfühler angesteuertes Magnetventil ausgebildet sein. Zwar ist aus einigen Fahrzeug-Klimaanlagen die Verwendung eines Überdruckventils oder einer Berst-Plombe bekannt, jedoch erfüllen diese Ventile nur Sicherheitsfunktionen. Danach kann bei gefährlich hohen Systemdrücken eine Kältemittel-Teilmenge in die Umgebung entweichen; Maßnahmen, um dieses entweichende und dabei im übrigen die Umwelt belastende Kältemittel einzufangen und dem Kältemittelkreislauf wieder zuzuführen, sind dabei bislang nicht bekannt. Die Verwendung eines Überdruckventils in der zum parallel geschalteten Behälter führenden Kältemittelleitung hat den Vorteil, daß die zeitweise Entnahme in Abhängigkeit vom tatsächlich herrschenden Systemdruck selbsttätig erfolgt, ein ansteuerbares Magnetventil hingegen weist den Vorteil auf, daß nach Absinken des Systemdruckes durch einfaches Öffnen des Magnetventiles die im Behälter gespeicherte Kältemittel-Teilmenge dem Kreislauf wieder zugeführt werden kann.

Nach Anspruch 2 kann die Zylinder-Kolbeneinheit mit einer Haltevorrichtung für den vom in den Zylinder (Behälter) strömenden Kältemittel bewegten Kolben versehen sein. Somit übt der Kraftspeicher keinen zusätzlichen Druck auf den Kältemittelkreislauf aus, das oben genannte Magnetventil in der Verbindungsleitung kann dadurch entfallen. Ist der Systemdruck nach Abzug der Teilmenge wieder genügend weit abgefallen, so wird die Haltevorrichtung gelöst und das im Zylinder (Behälter) gespeicherte Kältemittel dem Kreislauf unter Einwirkung des Druckspeichers, beispielsweise einer einfachen Feder, wieder zugeführt.

Auch ist es gemäß Anspruch 4 möglich, den Behälter beheizbar auszuführen, Soll nach Absinken des Systemdruckes die gespeicherte Kältemittel-Teilmenge dem Kreislauf wieder zugeführt werden, genügt eine kurzzeitige Erwärmung dieser Teilmenge – vorteilhafterweise über eine Beheizung des Behälters –, um den darin herrschenden Druck so weit zu erhöhen, daß die gespeicherte Kältemittel-Teilmenge dem Kreislauf selbsttätig wieder zugeführt wird.

Die Ansprüche 5 und 6 nennen vorteilhafte Ausbildungen der Rückführleitung vom Behälter zum Kältemittelkreislauf. Mündet dabei die Rückführleitung zwischen dem Steuerorgan und dem Drosselorgan in den Kältemittelkreislauf, so ist die Verwendung eines vom Systemdruck im Kreislauf gesteuerten Rückschlagventiles besonders vorteilhaft. Nach Absinken dieses Druckes unter einem vorgebbaren Wert soll dieses Rückschlagventil öffnen und somit den Weg für eine selbsttätige Rückführung der im Behälter gespeicherten Kältemittel-Teilmenge in den Kreislauf frei geben.

Besonders vorteilhaft ist es aber auch, nach Anspruch 6 die Rückführleitung als ein zwischen dem Verdampfer und der Kompressorsaugseite in den Kältemittelkreislauf mündendes Kapillarrohr auszubilden. Somit läuft zeitlich gesehen der gesamte bisher geschilderte Vorgang quasi kontinuierlich ab. Treten im Kältemittelkreislauf zwischen der Kompressordruckseite und dem Drosselorgan unzulässig hohe – weil die Kompressor-Schaltkupplung schädigende – Druckwerte auf, wird eine Teilmenge des Kältemittels in den Behälter abgeführt und, da das Kapillarrohr nur geringste Kältemittelmengen zu führen in der Lage ist, dort zumindest kurzzeitig gespeichert. Die kontinuierliche und mengenmäßig deutlich reduziert Rückführung in den Kreislauf erfolgt sozusagen schrittweise, wobei das Kältemittel aufgrund der Kapillarwirkung seinen physikalischen Zustand ändert und somit das Kapillarrohr direkt vor dem Kompressor in den Kreislauf münden kann.

Im folgenden wird die vorliegende Erfindung anhand zweier bevorzugter – nur schematisch dargestellter – Ausführungsbeispiele näher beschrieben.·

Es zeigt:

Fig. 1 einen erfindungsgemäßen Kältemittelkreislauf mit einem Magnetventil gemäß Anspruch 3, sowie

Fig. 2 einen anderen erfindungsgemäßen Kältemittelkreisauf mit einer als Kapillarrohr ausgebildeten Rückführleitung gemäß Anspruch 6.

Ein Kältemittelkreislauf einer Fahrzeug-Klimaanlage ist in an sich bekannter Weise aufgebaut aus einem Kompressor 1, einem Kondensator 2, einem Drosselorgan 3 sowie einem Verdampfer 4, wobei diese Elemente in der genannten Reihenfolge vom Kältemittel durchströmt werden. Zusätzlich ist ein Steuerorgan 5 vorgesehen, welches im Kondensator 2 verflüssigtes Kältemittel aus dem Kreislauf zur zumindest kurzzeitigen Speicherung in einen Behälter 6 abzuziehen vermag. In beiden Ausführungsbeispielen ist dabei der Behälter 6 als eine Zylinder-Kolbeneinheit ausgebildet, innerhalb derer eine als Druckspeicher auf den Kolben 7 wirkende Feder 8 vorgesehen ist.

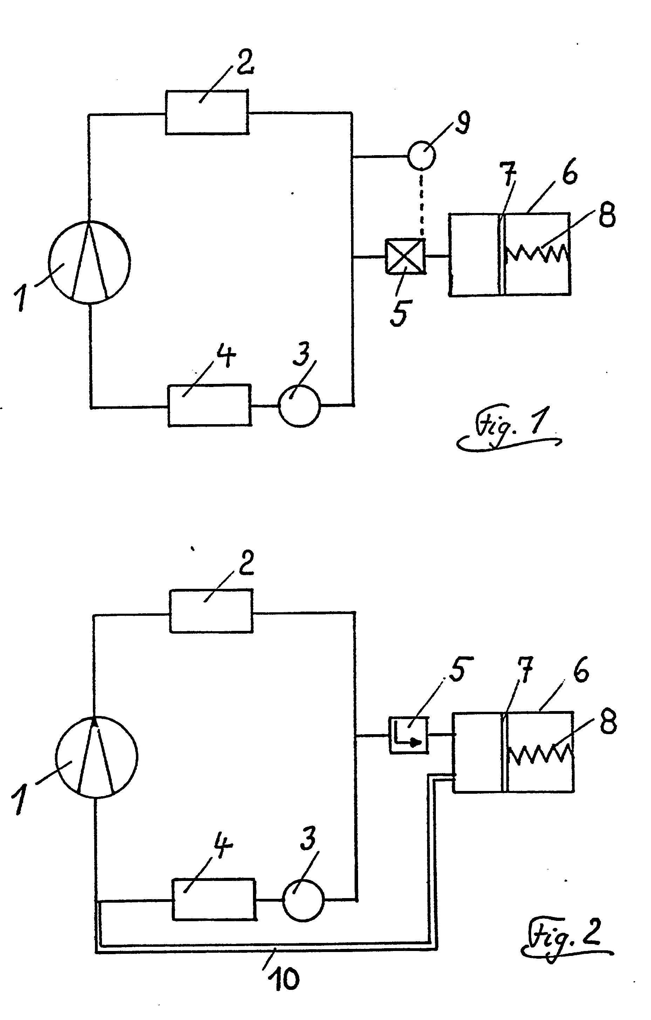

In Fig. 1 stellt das Steuerorgan 5 ein von einem Drucksensor 9 gesteuertes Magnetventil dar. Erkennt der Drucksensor 9 im Kältemittelkreislauf zwischen dem Kondensator 2 und dem Drosselorgan 3 einen unzulässig hohen Druckwert, so veranlaßt er ein Öffnen des Magnetventiles 5, wodurch eine gewisse Teilmenge des Kältemittels in den Behälter 6 strömt und dabei durch Verschieben des Kolbens 7 die Feder 8 unter Vorspannung versetzt. Somit fällt der Druck im Kreislauf auf einen signifikanten und vom Drucksensor 9 registrierten Wert ab, wodurch dieser das Magnetventil (Steuerorgan 5) zum Schließen veranlaßt. Dadurch ist der Druck im Kältemittelkreislauf soweit herabgesetzt, daß die Schaltkupplung des Kompressors keinen Schaden durch unzulässig hohe Druckwerte nehmen kann.

Fällt später der Systemdruck abermals ab, so veranlaßt der Drucksensor 9 das Magnetventil (Steuerorgan 5) wieder zum Öffnen, wodurch die im Behälter 6 unter Druck durch die Vorspannung der Feder 8 stehende Kältemittel-Teilmenge dem Kreislauf wieder zugeführt wird.

Selbstverständlich ist hiermit auch die bereits anfangs genannte Variante zur Steuerung der Kühlleistung realisierbar, wonach der Kompressor 1 kontinuierlich betrieben wird und wobei lediglich eine mehr oder weniger große Menge von Kältemittel dem Kreislauf entzogen wird. In diesem Fall kann der Drucksensor 9 entfallen, das Magnetventil (Steuerorgan 5) wird somit (nicht dargestellt) von einem die effektive Kühlleistung messenden Temperaturfühler o. ä. angesteuert.

Im Ausführungsbeispiel nach Fig. 2 ist das Steuerorgan 5 als Überdruckventil ausgebildet. Bei Überschreiten eines unzulässig hohen Systemdruckes öffnet dieses Überdruckventil selbsttätig und gibt den Weg zum Behälter 6 für eine Kältemittel-Teilmenge solange frei, bis der Systemdruck wieder auf einen akzeptierbaren Wert abgefallen ist.

Die Rückführung dieser Kältemittel-Teilmenge in den eigentlichen Kreislauf erfolgt bei diesem Ausführungsbeispiel, kontinuierlich nach zumindest kurzzeitiger Speicherung im Behälter 6 über ein Kapillarrohr 10. Aufgrund der Kapillarwirkung ändert das Kältemittel im Kapillarrohr 10 seinen physikalischen Zustand und kann somit den Kreislauf direkt vor der Saugseite des Kompressors 1 zugeführt werden.

## Patentansprüche

1. Kältemittelkreislauf einer Klimaanlage für Kraftfahrzeuge, wobei ein von der Brennkraftmaschine des Kraftfahrzeugs über eine Schaltkupplung angetriebener Kompressor (1), ein Kondensator (2), ein Drosselorgan (3) sowie ein Verdampfer (4) in Reihe geschaltet sind, und wobei ein Steuerorgan (5) vorgesehen ist, um diesem Kältemittelkreislauf eine Teilmenge verflüssigten Kältemittels abzuziehen und wieder zuzuführen, gekennzeichnet durch einen dem Kältemittelkreislauf parallelgeschalteten Behälter (6) für eine zumindest kurzzeitige Speicherung der abgezogenen Kältemittel-Teilmenge, wobei der Behälter (6) als eine mit einem Druckspeicher (8) versehene Kolben-Zylindereinheit ausgebildet oder mit einer das Kältemittel von einem Gaspolster trennenden Membran versehen ist.

2. Kältemittelkreislauf nach Anspruch 1, dadurch gekennzeichnet, daß eine ansteuerbare Haltevorrichtung für den Kolben der Kolben-Zylindereinheit vorgesehen ist.

3. Kältemittelkreislauf nach Anspruch 1 oder 2, dadurch gekennzeichnet, daß das Steuerorgan (5) als Überdruckventil oder als ein von einem Druckfühler (9) angesteuertes Magnetventil ausgebildet ist.

4. Kältemittelkreislauf nach einem der vorangegangenen Ansprüche, dadurch gekennzeichnet, daß der Behälter beheizbar ist.

5. Kältemittelkreislauf nach einem der vorangegangenen Ansprüche, wobei die abgezogene Kältemittel-Teilmenge dem Kältemittelkreislauf über eine Rückführleitung wieder zugeführt wird, dadurch gekennzeichnet, daß in der zwischen dem Steuerorgan (5) und dem Drosselorgan (3) in den Kältemittelkreislauf mündenden Rückführleitung ein vom Kreislaufdruck gesteuertes Rückschlagventil angeordnet ist.

6. Kältemittelkreislauf nach einem der vorangegangenen Ansprüche, dadurch gekennzeichnet, daß die Rückführleitung als ein auf der Saugseite des Kompressors (1) in den Kältemittelkreislauf mündendes Kapillarrohr (10) ausgebildet ist.

## Claims

1. A coolant circuit of an air-conditioning plant for motor vehicles, where a compressor (1) driven by the internal combustion engine of the motor vehicle through a clutch, a condenser (2), a throttle element (3) and an evaporator (4) are connected in series, and where a control element (5) is provided in order to withdraw a partial quantity of liquefied coolant from this coolant circuit and return it thereto, characterised by a container (6) connected in parallel with the coolant circuit for an at least brief storage of the withdrawn partial quantity of coolant, the container (6) being formed as a piston-cylinder unit provided with a pressure reservoir (8) or being provided with a diaphragm separating the coolant from a gas cushion.

2. A coolant circuit according to Claim 1, characterised in that an actuatable retaining device is provided for the piston of the piston-cylinder unit.

3. A coolant circuit according to Claim 1 or 2, characterised in that the control element (5) is formed as over-pressure valve or as a magnetic valve actuated by a pressure sensor (9).

4. A coolant circuit according to any one of the preceding Claims, characterised in that the container is heatable.

5. A coolant circuit according to any one of the preceding Claims, where the withdrawn partial quantity of coolant is returned to the coolant circuit through a return conduit, characterised in that a non-return valve controlled by the circuit pressure is arranged in the return conduit with opens into the coolant circuit between the control element (5) and the throttle element (3).

6. A coolant circuit according to any one of the preceding Claims, characterised in that the return conduit is formed as a capillary tube (10) opening into the coolant circuit on the suction side of the compressor (1).

## Revendications

1. Circuit de refroidissement d'une installation de climatisation pour véhicules automobiles, circuit dans lequel un compresseur (1) entraîné, par l'intermédiaire d'un embrayage, par le moteur à combustion interne du véhicule automobile, un condenseur (2), un organe d'étranglement (3) ainsi qu'un évaporateur (4) sont branchés en série, et dans lequel il est prévu un organe de commande (5) pour extraire de ce circuit une quantité partielle du fluide de refroidissement condensé et pour la réintroduire dans le circuit, circuit de refroidissement caractérisé en ce qu'il est prévu un réservoir (6) branché en parallèle sur le circuit de refroidissement pour emmagasiner, tout au moins pour une courte durée, la quantité partielle de fluide de refroidissement extraite, ce réservoir revêtant la forme d'une unité piston-cylindre munie d'un accumulateur de pression (8) ou bien étant muni d'une membrane séparant le fluide de refroidissement d'un coussin d'air.

2. Circuit de refroidissement selon la revendication 1, caractérisé en ce qu'il est prévu pour le piston de l'unité piston-cylindre, un dispositif de retenue susceptible d'être commandé.

3. Circuit de refroidissement selon la revendication 1 ou la revendication 2, caractérisé en ce que l'organe de commande (5) revêt la forme d'une soupape de surpression ou d'une électrovanne commandée par un capteur de pression (9).

4. Circuit de refroidissement selon une des précédentes revendications, caractérisé en ce que le réservoir est susceptible d'être chauffé.

5. Circuit de refroidissement selon une des précédentes revendications, dans lequel la quantité partielle de fluide de refroidissement extraite est réintroduite dans le circuit de refroidissement par l'intermédiaire d'une canalisation de retour, circuit de refroidissement caractérisé en ce qu'une soupape de retenue commandée par la pression du circuit est disposée sur la canalisation de retour débouchant dans le circuit de refroidissement entre l'organe de commande (5) et l'organe d'étranglement (3).

6. Circuit de refroidissement selon une des précédentes revendications, caractérisé en ce que la canalisation de retour revêt la forme d'un tube capillaire (10) débouchant dans le circuit de refroidissement sur le côté aspiration du compresseur (1).

Fig. 1

Fig. 2